# EUROPEAN PATENT APPLICATION

(11) **EP 4 586 508 A1**
(43) Date of publication of application: **16.07.2025**
(21) Application number: 23870584.2
(22) Date of filing: 21.09.2023
(51) Int. Cl.: H04B 1/7136

(54) **COMMUNICATION METHOD AND COMMUNICATION APPARATUS**

(30) Priority: 29.09.2022 CN 202211204255
(71) Applicant: Huawei Technologies Co., Ltd., Shenzhen, Guangdong 518129 (CN)
(72) Inventor: WANG, Zhonglong, Shenzhen, Guangdong 518129 (CN); XIE, Xinqian, Shenzhen, Guangdong 518129 (CN); SHAO, Jiafeng, Shenzhen, Guangdong 518129 (CN); YE, Wei, Shenzhen, Guangdong 518129 (CN); LI, Hantao, Shenzhen, Guangdong 518129 (CN)
(74) Representative: Gill Jennings & Every LLP
(86) International application number: PCT/CN2023/120441
(87) International publication number: WO 2024/067352

(57) **Abstract**

Embodiments of this application provide a communication method and apparatus. The communication method includes: A first device receives first information from a network device, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2; and the first device sends the K sensing signals on the first time-frequency resource based on the first information. Therefore, the first device multiplexes a time-frequency resource with a communication base station in a frequency hopping manner, so that a sensing coverage capability of the first device can be improved without reducing a range resolution capability or range precision.

## Description

This application claims priority to Chinese Patent Application No. 202211204255.0, filed with the China National Intellectual Property Administration on September 29, 2022 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

Currently, integrated sensing and communication is a key technology in a next-generation wireless communication network. In this technology, two functions, that is, wireless communication and sensing, are integrated into a same system, and sensing functions such as positioning, detection, imaging, and identification for a target are implemented by using various propagation features of a radio signal, to obtain surrounding physical environment information, mine a communication capability, and improve user experience.

To implement low-cost network sensing, an integrated access and backhaul (integrated access and backhaul, IAB) node may be added to the network for sensing. The IAB node and a communication base station use a networking mode of intra-frequency networking, and multiplex a downlink resource in a time division or frequency division manner. The IAB node in the network sends a sensing signal on an allocated downlink resource, and receives an echo signal of the sensing signal, to implement environment sensing.

Because a transmit power of the IAB node is low, how to improve a sensing coverage capability of the IAB node while maintaining a range resolution capability or range precision without loss when the power is limited is an urgent problem to be resolved.

### SUMMARY

Embodiments of this application provide a communication method. An IAB node multiplexes a time-frequency resource with a communication base station in a frequency hopping manner. The IAB node sends a sensing signal on an allocated frequency-hopping time-frequency resource, and receives an echo signal of the sensing signal, so that a sensing coverage capability of the IAB node can be improved without reducing a range resolution capability or range precision.

According to a first aspect, a communication method is provided. The method may be performed by a first device, or may be performed by a component (for example, a chip or a circuit) of the first device. This is not limited. For ease of description, the following uses an example in which the method is performed by the first device for description.

The method may include: The first device receives first information from a network device, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2; and the first device sends the K sensing signals on the first time-frequency resource based on the first information.

It should be noted that the sensing signal may also be referred to as a sounding signal, an integrated sensing and communication signal, or the like. This is not limited in this application.

Based on the foregoing solution, the first device sends, in a frequency hopping manner based on the first information from the network device, a plurality of sensing signals on the first time-frequency resource indicated by the first information, so that the first device accumulates more echo signal energy during sensing, to improve a sensing coverage capability of the first device.

With reference to the first aspect, in some implementations of the first aspect, the first device is an integrated access and backhaul IAB device.

With reference to the first aspect, in some implementations of the first aspect, the M frequency domain resources are consecutive in frequency domain.

Based on the foregoing solution, because a union set of the M frequency domain resources is consecutive in frequency domain, a sensing range resolution capability or range precision in the solution is the same as a sensing range resolution capability or range precision in a solution in which each sensing signal sent by the first device occupies the union set of the M frequency domain resources in frequency domain.

With reference to the first aspect, in some implementations of the first aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

Based on the foregoing solution, two adjacent sensing signals on a same frequency domain resource are separated by C time domain symbols, so that a sensing signal processing algorithm used when coherent combination is performed on echo signals of the K sensing signals is simple.

With reference to the first aspect, in some implementations of the first aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

Based on the foregoing solution, the first device can send a plurality of sensing signals in one slot in a frequency hopping manner, to improve a sensing coverage capability of the first device.

With reference to the first aspect, in some implementations of the first aspect, the first time-frequency resource does not overlap a control channel resource configured by the network device.

The control channel resource may be a time-frequency resource occupied by a PDCCH of a terminal device served by the network device. This is not limited in this application.

It should be noted that, that the first time-frequency resource does not overlap a control channel resource configured by the network device may be understood as that the first time-frequency resource does not occupy the control channel resource, or may be understood as that the first time-frequency resource does not occupy the time-frequency resource occupied by the PDCCH of the terminal device served by the network device. This is not limited in this application.

Based on the foregoing solution, the first device sends a plurality of sensing signals on a time-frequency resource other than the control channel resource in one slot, so that control channel transmission is not affected.

With reference to the first aspect, in some implementations of the first aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

With reference to the first aspect, in some implementations of the first aspect, the method further includes: The first device receives an echo signal of the sensing signal on the first time-frequency resource based on the first information.

Based on the foregoing solution, the first device can receive the echo signal of the sensing signal on the first time-frequency resource based on the first information, so that the first device accumulates more echo signal energy during sensing, to improve a sensing coverage capability of the first device.

According to a second aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device determines first information, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2; and the network device sends the first information to a first device.

Based on the foregoing solution, the network device configures, for the first device, the first information that indicates the first time-frequency resource, so that the first device sends a plurality of sensing signals on the corresponding first time-frequency resource in a frequency hopping manner based on the first information. In this way, the first device accumulates more echo signal energy during sensing, to improve a sensing coverage capability of the first device.

With reference to the second aspect, in some implementations of the second aspect, the first device is an integrated access and backhaul IAB device.

With reference to the second aspect, in some implementations of the second aspect, the M frequency domain resources are consecutive in frequency domain.

Based on the foregoing solution, because a union set of the M frequency domain resources is consecutive in frequency domain, a sensing range resolution capability or range precision is the same as a sensing range resolution capability or range precision in a solution in which each sensing signal sent by the first device occupies the union set of the M frequency domain resources in frequency domain.

With reference to the second aspect, in some implementations of the second aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

Based on the foregoing solution, two adjacent sensing signals on a same frequency domain resource are separated by C time domain symbols, so that a sensing signal processing algorithm used when coherent combination is performed on echo signals of the K sensing signals is simple.

With reference to the second aspect, in some implementations of the second aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

Based on the foregoing solution, the first information configured by the network device enables the first device to send a plurality of sensing signals in one slot in a frequency hopping manner, to improve a sensing coverage capability of the first device.

With reference to the second aspect, in some implementations of the second aspect, the first time-frequency resource does not overlap a control channel resource configured by the network device.

Based on the foregoing solution, the first device sends a plurality of sensing signals on a time-frequency resource other than the control channel resource in one slot, so that control channel transmission is not affected.

With reference to the second aspect, in some implementations of the second aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

With reference to the second aspect, in some implementations of the second aspect, the method further includes: The network device sends second information to a terminal device, where the second information indicates a time-frequency resource that does not carry a PDSCH, and the time-frequency resource that does not carry the PDSCH includes a time-frequency resource occupied by at least one of the K sensing signals.

Based on the foregoing solution, the network device can send the second information to the terminal device, so that the terminal device receives the PDSCH on a time-frequency resource other than the first time-frequency resource based on the second information, to avoid a case in which the terminal device receives the PDSCH on a time-frequency resource carrying a sensing signal.

With reference to the second aspect, in some implementations of the second aspect, the method further includes: The network device sends the first information to a second device, where the second device is an IAB device.

According to a third aspect, a communication method is provided. The method may be performed by a second device, or may be performed by a component (for example, a chip or a circuit) of the second device. This is not limited. For ease of description, the following uses an example in which the method is performed by the second device for description.

The method may include: The second device receives first information from a network device, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2; and the second device receives an echo signal of the sensing signal from a first device on the first time-frequency resource based on the first information.

Based on the foregoing solution, the second device can receive, on the first time-frequency resource indicated by the first information based on the first information from the network device, echo signals of a plurality of sensing signals sent by the first device. In this way, the second device accumulates more echo signal energy during sensing, to improve a sensing coverage capability of the second device.

With reference to the third aspect, in some implementations of the third aspect, the second device is an IAB device, and the first device is an IAB device.

With reference to the third aspect, in some implementations of the third aspect, the M frequency domain resources are consecutive in frequency domain.

Based on the foregoing solution, because a union set of the M frequency domain resources is consecutive in frequency domain, a sensing range resolution capability or range precision in the solution is the same as a sensing range resolution capability or range precision in a solution in which each sensing signal sent by the first device occupies the union set of the M frequency domain resources in frequency domain.

With reference to the third aspect, in some implementations of the third aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

Based on the foregoing solution, two adjacent sensing signals on a same frequency domain resource are separated by C time domain symbols, so that a sensing signal processing algorithm used when coherent combination is performed on echo signals of the K sensing signals is simple.

With reference to the third aspect, in some implementations of the third aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

Based on the foregoing solution, the first information configured by the network device enables the second device to receive echo signals of a plurality of sensing signals in one slot in a frequency hopping manner, to improve a sensing coverage capability of the second device.

With reference to the third aspect, in some implementations of the third aspect, the first time-frequency resource does not overlap a control channel resource configured by the network device.

Based on the foregoing solution, the second device sends a plurality of sensing signals on a time-frequency resource other than the control channel resource in one slot, so that control channel transmission is not affected.

With reference to the third aspect, in some implementations of the third aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

According to a fourth aspect, a communication apparatus is provided, including a unit configured to perform the method according to the first aspect. The communication apparatus may be a first device, or may be a chip or a circuit disposed in the first device. This is not limited in this application.

The communication apparatus includes:
a transceiver unit, configured to receive first information from a network device, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2. The transceiver unit is further configured to send the K sensing signals on the first time-frequency resource based on the first information.

With reference to the fourth aspect, in some implementations of the fourth aspect, the first device is an integrated access and backhaul IAB device.

With reference to the fourth aspect, in some implementations of the fourth aspect, the M frequency domain resources are consecutive in frequency domain.

With reference to the fourth aspect, in some implementations of the fourth aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

With reference to the fourth aspect, in some implementations of the fourth aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

With reference to the fourth aspect, in some implementations of the fourth aspect, the first time-frequency resource does not overlap a control channel resource configured by the network device.

With reference to the fourth aspect, in some implementations of the fourth aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

With reference to the fourth aspect, in some implementations of the fourth aspect, the transceiver unit is further configured to receive an echo signal of the sensing signal on the first time-frequency resource based on the first information.

For explanations of related content and beneficial effects of the communication apparatus provided in the fourth aspect, refer to the method according to the first aspect. Details are not described herein again.

According to a fifth aspect, a communication apparatus is provided, including a unit configured to perform the method according to the second aspect. The communication apparatus may be a network device, or may be a chip or a circuit disposed in the network device. This is not limited in this application.

The communication apparatus includes:
a processing unit, configured to determine first information, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2; and a transceiver unit, configured to send the first information to a first device.

With reference to the fifth aspect, in some implementations of the fifth aspect, the first device is an integrated access and backhaul IAB device.

With reference to the fifth aspect, in some implementations of the fifth aspect, the M frequency domain resources are consecutive in frequency domain.

With reference to the fifth aspect, in some implementations of the fifth aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

With reference to the fifth aspect, in some implementations of the fifth aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

With reference to the fifth aspect, in some implementations of the fifth aspect, the first time-frequency resource does not overlap a control channel resource configured by the network device.

With reference to the fifth aspect, in some implementations of the fifth aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

With reference to the fifth aspect, in some implementations of the fifth aspect, the transceiver unit is further configured to send second information to a terminal device, where the second information indicates a time-frequency resource that does not carry a PDSCH, and the time-frequency resource that does not carry the PDSCH includes a time-frequency resource occupied by at least one of the K sensing signals.

With reference to the fifth aspect, in some implementations of the fifth aspect, the transceiver unit is further configured to send the first information to a second device, where the second device is an IAB device.

For explanations of related content and beneficial effects of the communication apparatus provided in the fifth aspect, refer to the method according to the second aspect. Details are not described herein again.

According to a sixth aspect, a communication apparatus is provided, including a unit configured to perform the method according to the third aspect. The communication apparatus may be a second device, or may be a chip or a circuit disposed in the second device. This is not limited in this application.

The communication apparatus includes:
a transceiver unit, configured to receive first information from a network device, where the first information indicates a first time-frequency resource, the first time-frequency resource is a time-frequency resource that carries K sensing signals in one slot, the first time-frequency resource includes K time domain symbols in time domain, the first time-frequency resource includes M frequency domain resources that do not overlap each other in frequency domain, at least two sensing signals included in the K sensing signals occupy different frequency domain resources in the first time-frequency resource, K and M are positive integers, K is greater than or equal to M, and K is greater than or equal to 2. The transceiver unit is further configured to receive an echo signal of the sensing signal from a first device on the first time-frequency resource based on the first information.

With reference to the sixth aspect, in some implementations of the sixth aspect, the second device is an IAB device, and the first device is an IAB device.

With reference to the sixth aspect, in some implementations of the sixth aspect, the M frequency domain resources are consecutive in frequency domain.

With reference to the sixth aspect, in some implementations of the sixth aspect, the slot includes S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

With reference to the sixth aspect, in some implementations of the sixth aspect, the slot includes 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are {3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

With reference to the sixth aspect, in some implementations of the sixth aspect, the first time-frequency resource does not overlap a control channel resource configured by the network device.

With reference to the sixth aspect, in some implementations of the sixth aspect, the first information includes at least one of the following: a frequency hopping period, a frequency hopping location, a frequency hopping bandwidth, or the indexes of the time domain symbols that carry the K sensing signals. The frequency hopping period is the C time domain symbols, the frequency hopping location is locations of the M frequency domain resources, and the frequency hopping bandwidth indicates bandwidths of the M frequency domain resources.

For explanations of related content and beneficial effects of the communication apparatus provided in the sixth aspect, refer to the method according to the third aspect. Details are not described herein again.

According to a seventh aspect, a communication apparatus is provided. The apparatus includes: a memory, configured to store a program; and at least one processor, configured to execute the computer program or instructions stored in the memory, to perform the method in any one of the possible implementations of the first aspect to the third aspect.

In an implementation, the apparatus is a first device.

In another implementation, the apparatus is a chip, a chip system, or a circuit used in the first device.

According to an eighth aspect, this application provides a processor, configured to perform the methods provided in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a computer-readable storage medium is provided. The computer-readable storage medium stores program code to be executed by a device, and the program code is for performing the method in any one of the possible implementations of the first aspect to the third aspect.

According to a tenth aspect, a computer program product including instructions is provided. When the computer program product runs on a computer, the computer is enabled to perform the method in any one of the possible implementations of the first aspect to the third aspect.

According to an eleventh aspect, a chip is provided. The chip includes a processor and a communication interface. The processor reads, through the communication interface, instructions stored in a memory, to perform the method in any one of the possible implementations of the first aspect to the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method in any one of the possible implementations of the first aspect to the third aspect.

According to a twelfth aspect, a communication system is provided, including one or more of the foregoing first device, network device, and second device.

### BRIEF DESCRIPTION OF DRAWINGS

FIG. 1 is a diagram of networking at an IAB radio access network side;
FIG. 2 is a diagram of a system architecture to which an embodiment of this application is applicable;
FIG. 3 is a diagram of an application scenario to which an embodiment of this application is applicable;
FIG. 4 is a diagram of another application scenario to which an embodiment of this application is applicable;
FIG. 5 is a schematic flowchart of a communication method 500 according to an embodiment of this application;
FIG. 6 is a schematic flowchart of a communication method 600 according to an embodiment of this application;
FIG. 7 is a diagram of a first time-frequency resource in a scenario of a single time domain symbol DMRS and one additional DMRS;
FIG. 8 is a diagram of another first time-frequency resource in a scenario of a single time domain symbol DMRS and one additional DMRS;
FIG. 9 is a diagram of a first time-frequency resource in a scenario of a single time domain symbol DMRS and two additional DMRSs;
FIG. 10 is a diagram of a first time-frequency resource in a scenario of a single time domain symbol DMRS and three additional DMRSs;
FIG. 11 is a diagram of a first time-frequency resource in a scenario of a double time domain symbol DMRS and one additional DMRS;
FIG. 12 is a diagram of a first time-frequency resource in a scenario of a double time domain symbol DMRS and two additional DMRSs;
FIG. 13 is a schematic flowchart of a communication method 1300 according to an embodiment of this application;
FIG. 14 is a block diagram of a communication apparatus 1400 according to an embodiment of this application;
FIG. 15 is a block diagram of another communication apparatus 1500 according to an embodiment of this application; and
FIG. 16 is a diagram of a chip system 1600 according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a long term evolution (LTE) system, a long term evolution-advanced (LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a next-generation communication system (for example, a 5th generation (5th generation, 5G) communication system), a converged system of a plurality of access systems, an evolved system, three major application scenarios of a 5G mobile communication system: enhanced mobile broadband (enhanced Mobile Broadband, eMBB), ultra-reliable low-latency communication (ultra-reliable low-latency communication, URLLC), and enhanced machine type communication (enhanced Machine Type Communication, eMTC), or a new communication system emerging in the future. The technical solutions provided in this application may be further applied to a future communication system, for example, a 6th generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

A terminal device in embodiments of this application may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. A terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

A network device in embodiments of this application may be a communication base station. For example, the network device may be a base station (base station), an evolved base station (evolved NodeB, eNodeB), a next generation base station (next generation NodeB, gNB) in a 5G mobile communication system, a transmission reception point (transmission reception point, TRP), a base station evolved in 3GPP, or an access node in a wireless fidelity (wireless fidelity, Wi-Fi) system. The network device may include one or more co-site or non-co-site transmission reception points. For another example, the network device may include a central unit (central unit, CU) and a distributed unit (distributed unit, DU), that is, a CU and a DU. In this way, some functions of a radio access network device may be implemented by a plurality of network function entities. These network function entities may be network elements in a hardware device, may be software functions run on dedicated hardware, or may be virtualized functions instantiated on a platform (for example, a cloud platform). For example, a network device in a vehicle-to-everything (vehicle-to-everything, V2X) technology may be a road side unit (road side unit, RSU). A plurality of network devices in a communication system may be base stations of a same type, or may be base stations of different types. The base station may communicate with the terminal device, or may communicate with the terminal device via a relay station. In embodiments of this application, a communication apparatus configured to implement a function of the network device may be a network device, may be a network device that has some functions of a base station, or may be an apparatus that can support the network device in implementing the function, for example, a chip system. The apparatus may be installed in the network device.

An IAB node is connected to the communication base station through a wireless backhaul link. In an IAB network architecture, a communication base station is usually referred to as a donor base station (donor next generation NodeB, DgNB). In this application, the donor base station is also referred to as a donor node, namely, an IAB-donor node. The IAB node is a specific name of a relay node, and does not constitute a limitation on the solutions in this application. The IAB node may be the foregoing base station or terminal device having a forwarding function, or may be in an independent device form. The IAB node in this application may further have a sensing function, to be specific, the device may transmit a sensing signal, and receive and process an echo signal reflected by a target in an environment. In this application, the IAB node used for sensing is also referred to as an IAB sensing node. An IAB node may be connected to a donor node through a wireless backhaul link, to be connected to a network. In addition, a relay node may be connected to the network by using multiple levels of wireless relay nodes. It should be understood that in this application, the IAB node is used only for a purpose of description, and does not indicate that the solutions of this application are used only in an NR scenario. In this application, the IAB node may be any node or device that has a relay function. It should be understood that use of the IAB node and the relay node in this application has a same meaning. For example, the IAB node may be a base station, a transmission reception point TRP, and a module or an apparatus disposed on a moving object. The moving object includes but is not limited to a device in the internet of things, for example, a car, a train, or an airplane.

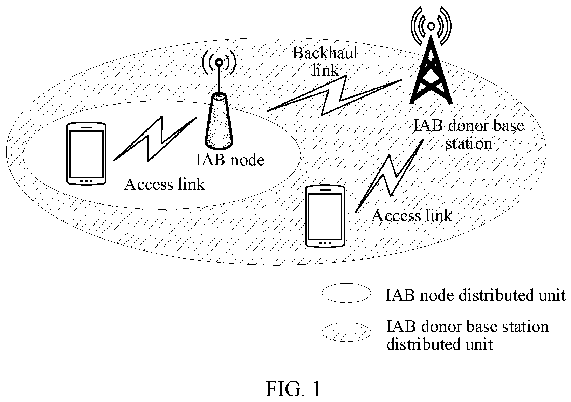

For example, FIG. 1 is a diagram of networking at an IAB radio access network side.

As shown in FIG. 1, in an IAB network, a relay node (relay node, RN), also referred to as an IAB node (IAB-node), may provide a radio access service for user equipment (user equipment, UE). The UE is connected to the IAB-node through a radio access link. Service data of the UE is connected to an IAB donor base station (IAB-donor) through a radio backhaul link by using the IAB-node, and is accessed to a core network (for example, a 5G core network) by using the IAB-donor. The IAB-node includes a mobile terminal (mobile termination, MT) and a distributed unit (distributed unit, DU). When facing a parent node of the IAB-node, the IAB-node may serve as a terminal device, that is, a role of the MT. When facing a sub-node (the sub-node may be another IAB-node or common UE) of the IAB-node, the IAB-node is considered as a network device, that is, a role of the DU. A central unit (central unit, CU) of the IAB network is located in the IAB-donor.

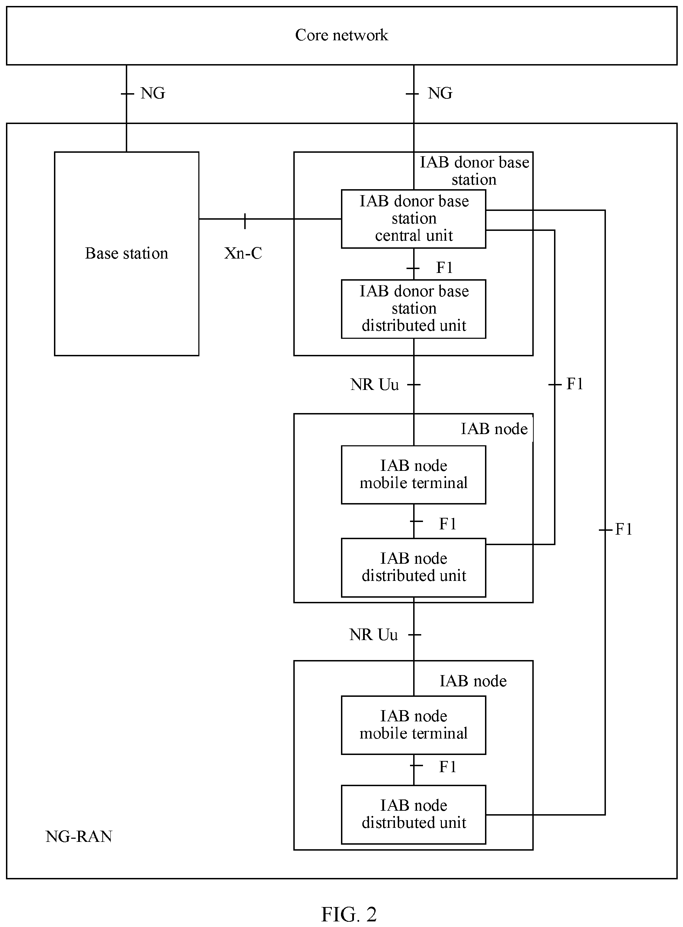

FIG. 2 is a diagram of a system architecture to which an embodiment of this application is applicable. As shown in FIG. 2, an IAB (or referred to as an IAB device) is a wireless backhaul base station. A particularity of the IAB is that the IAB first needs to establish a backhaul channel with a target macro base station, and then provides a wireless coverage service externally, similar to a customer premise equipment (customer premise equipment, CPE), but a difference is that the CPE provides a wireless fidelity (wireless fidelity, Wi-Fi) coverage externally. The IAB provides a radio signal of a base station externally, for example, a 5th generation (the 5th generation, 5G) signal. The IAB is mainly used to extend coverage of the macro base station. With a high-power multi-antenna reception feature of a backhaul apparatus, the IAB extends border coverage of the macro base station. In this way, a weak coverage area that is originally far away from the macro base station is changed to a good coverage area near the macro base station. The IAB needs to establish a connection with a fixed macro base station. Therefore, the IAB needs to accurately access the target macro base station to establish a backhaul channel.

In the IAB network architecture shown in FIG. 2, standalone (standalone, SA) networking is used as an example. The IAB-donor may include a central unit (central unit, CU) and distributed units (distributed units, DUs). To be specific, functions of the IAB-donor are split, some functions are deployed on the CU, and remaining functions are deployed on the DUs. A plurality of DUs share one CU. This can reduce costs and facilitate network extension. The CU is connected to the DUs through an F1 interface. On behalf of the IAB-donor, the CU is connected to a core network through a next generation (next generation, NG) interface. On behalf of the IAB-donor, the CU is connected to another gNB through an Xn interface.

The IAB-node DU is logically connected to the IAB-donor CU through the F1 interface. Actually, a connection between the IAB-node DU and the IAB-donor CU is implemented through an NR Uu interface between an IAB-node MT and a parent DU of each hop. However, because the IAB-node DU can communicate with the IAB-donor CU, it may be considered that the F1 interface exists logically, and the IAB-node DU and the IAB-donor CU may exchange control plane (F1-control plane, F1-C) information and user plane (F1-user plane, F1-U) information through the F1 interface. An IAB-node MT function is defined as a component similar to UE. In an IAB network, the MT is referred to as a function residing on the IAB-node. Because the MT has a function similar to a function of common UE, it may be considered that the IAB-node accesses a parent node or a network via the MT.

The following network elements/modules are mentioned in this application:
1. An IAB node is used to provide an access and wireless backhaul service for a sub-node or UE.
   It should be noted that, in this application, the IAB node may also be referred to as an IAB device. A name of the IAB node does not limit the protection scope of embodiments of this application.
2. An IAB-donor node (or referred to as a donor node or a donor node of an IAB node) is a base station that supports an IAB node, and may specifically include an IAB-donor CU and at least one IAB-donor DU. Optionally, the IAB-donor CU may include one IAB-donor-CU-CP and at least one IAB-donor-CU-UP. The IAB-donor-CU-CP and the IAB-donor-CU-UP respectively indicate a control plane (control plane, CP) and a user plane (user plane, UP) of the IAB-donor CU.
   It should be noted that, in this application, the IAB-donor node may also be referred to as a network device or a communication base station. A name of the IAB-donor node does not limit the protection scope of embodiments of this application.
3. A gNB is a 5G base station, and is configured to provide an access and backhaul service for a sub-node or UE.

Optionally, an IAB-donor in this application may be a gNB.

It should be understood that the network architectures shown in FIG. 1 and FIG. 2 are merely examples for description, and a network architecture to which embodiments of this application are applicable is not limited thereto. Embodiments of this application are applicable to any network architecture that can implement functions of the foregoing network elements.

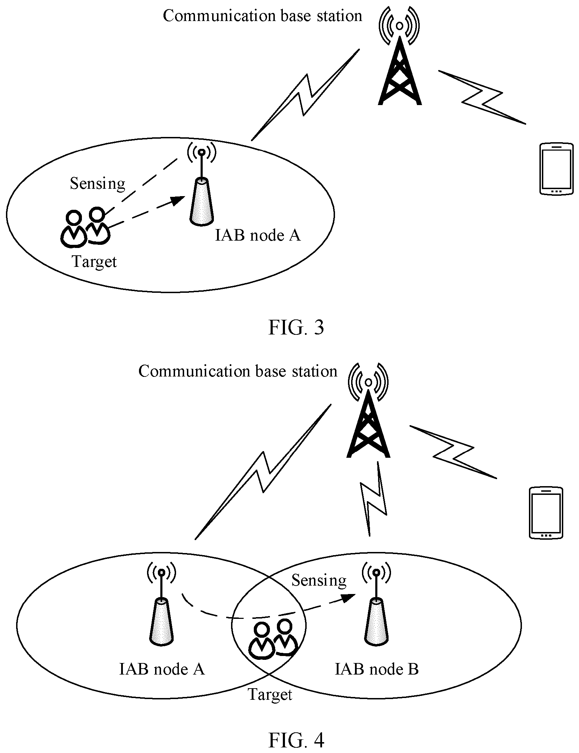

An application scenario to which this application is applicable is a scenario of intra-frequency networking of a communication base station and an IAB node (IAB sensing node) for sensing. In this scenario, a terminal device accesses the communication base station and communicates with the communication base station. The IAB node accesses the communication base station, and senses an environment by sending a sensing signal and receiving an echo signal. Depending on whether a same IAB node sends a sensing signal and receives an echo signal or two different IAB nodes respectively send a sensing signal and receive an echo signal, scenarios to which this application is applicable are specifically shown in FIG. 3 and FIG. 4. The following describes in detail the application scenarios to which this application is applicable with reference to FIG. 3 and FIG. 4.

FIG. 3 is a diagram of an application scenario to which an embodiment of this application is applicable. In the application scenario shown in FIG. 3, an IAB node A sends a sensing signal and receives an echo signal. Specifically, the IAB node A sends the sensing signal, and the IAB node A receives the echo signal generated when the sensing signal encounters a target in an environment, to sense the target and estimate information such as a location and a speed of the target.

FIG. 4 is a diagram of an application scenario to which an embodiment of this application is applicable. In the application scenario shown in FIG. 4, an IAB node A sends a sensing signal, and an IAB node B receives an echo signal. Specifically, the IAB node A sends the sensing signal, and the IAB node B receives the echo signal generated when the sensing signal encounters a target in an environment, to sense the target and estimate information such as a location and a speed of the target.

It should be understood that the application scenarios shown in FIG. 3 and FIG. 4 are merely examples for description, and an application scenario to which embodiments of this application are applicable is not limited thereto. Embodiments of this application are applicable to any application scenario to which this application can be applied.

It should be further understood that the foregoing names are defined merely for distinguishing between different functions, and should not constitute any limitation on this application. This application does not exclude a possibility of using other names in a 6G network and another future network.

It should be further understood that names of interfaces between the network elements in FIG. 1 and FIG. 4 are merely examples. In a specific implementation, the names of the interfaces may be other names. This is not specifically limited in this application. In addition, names of messages (or signaling) transmitted between the foregoing network elements are merely examples, and do not constitute any limitation on functions of the messages.

For ease of reading, the following describes or defines some technical terms or concepts in this application in a unified manner.

### 1. Integrated sensing and communication:

The integrated sensing and communication is a key technology in a next-generation wireless communication network. In this technology, two functions of wireless communication and sensing are integrated into a same system, and sensing functions such as positioning, detection, imaging, and identification for a target are implemented by using various propagation features of a radio signal, to obtain surrounding physical environment information, mine a communication capability, and improve user experience.

A basic principle of sensing is that a sensing device transmits a sensing signal, and the sensing device or another sensing device receives an echo signal reflected by a target in an environment. A delay of the echo signal relative to the sent sensing signal reflects a distance from the target to the sensing device, and a Doppler frequency shift of the echo signal relative to the sent sensing signal reflects a speed of the target. The echo signal may also be described as a reflected signal or the like. This is not limited herein.

### 2. Coherent processing time:

The coherent processing time refers to a time period that is much longer than a sending period of a sensing signal. In the coherence processing time, a transmit end periodically sends a sensing signal in a same beam direction, and a receive end receives an echo signal of the sensing signal, and performs coherent accumulation on all echo signals received in this time period to implement ranging and speed measurement for sensing. The coherent accumulation may be generally implemented by performing matched filtering and Fourier transform on all echo signals in this time period.

### 3. Target:

The target in this application is various tangible objects that can reflect an electromagnetic wave in an environment, for example, a ground object such as a mountain, a forest, or a building, or may be a movable object such as a vehicle, an uncrewed aerial vehicle, a pedestrian, or a terminal device. The target may also be referred to as a sensed target, a detected target, a sensed object, a detected object, a sensed device, or the like. This is not limited in this application.

It may be understood that the term "and/or" in this specification describes only an association relationship for associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes the terms in this application, and details are not described in the following embodiments again. The following describes in detail communication methods provided in embodiments of this application with reference to the accompanying drawings. Embodiments provided in this application may be applied to the network architectures shown in FIG. 1 to FIG. 3. This is not limited.

Based on the architectures shown in FIG. 1 to FIG. 4, in a scenario of intra-frequency networking of an IAB node and a communication base station, when the IAB node and the communication base station multiplex a resource in a time division manner, because a transmit power of the IAB node is low, echo signal energy accumulated by the IAB node during sensing is limited by a quantity of available time domain symbols, resulting in insufficient sensing coverage of the IAB node. When the IAB node and the communication base station multiplex a resource in a frequency division manner, a bandwidth used by the IAB node is limited, and consequently, a radial range resolution capability or range precision of the IAB node is insufficient. A radial direction refers to a direction of a connection line between the IAB node and a target.

This application provides a communication method. An IAB node multiplexes a time-frequency resource with a communication base station in a frequency hopping manner. The IAB node sends a sensing signal on an allocated frequency-hopping time-frequency resource, and receives an echo signal of the sensing signal, so that a sensing coverage capability of the IAB node can be improved without reducing a range resolution capability/range precision.

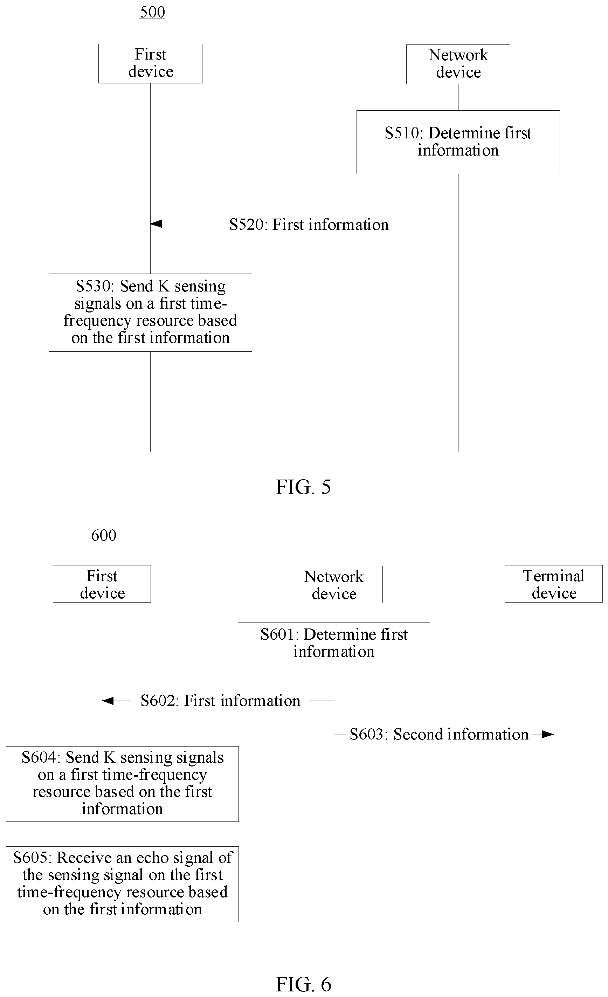

FIG. 5 is a diagram of a communication method 500 according to an embodiment of this application. The method 500 may include the following steps.

S510: A network device determines first information.

The first information indicates a first time-frequency resource.

Specifically, the first time-frequency resource is a time-frequency resource that carries K sensing signals in one slot. The first time-frequency resource includes K time domain symbols in time domain. The first time-frequency resource includes M frequency domain resources that do not overlap each other in frequency domain. At least two sensing signals included in the K sensing signals occupy different frequency domain resources in the first time-frequency resource. K and M are positive integers, K is greater than or equal to M, and K is greater than or equal to 2.

The sensing signal is used for sensing, and the sensing signal may also be referred to as a sounding signal, an integrated sensing and communication signal, or the like. This is not limited in this application.

It should be understood that, that the sensing signal is used for sensing means that a device may perform positioning, speed measurement, detection, imaging, identification, and the like on a target in an environment by receiving an echo signal of the sensing signal that is reflected by the target in the environment. In addition, the sensing signal may be an orthogonal frequency division multiplexing (orthogonal frequency division multiplexing, OFDM) signal obtained by modulating a particular sequence on a subcarrier. The particular sequence may be any one of the following sequences: a Zadoff-Chu sequence (ZC sequence), a pseudo-random sequence, a predefined sequence, and the like. The pseudo-random sequence includes any one of the following sequences: a maximum-length linear feedback shift register sequence (m sequence), a Gold sequence, and the like. The predefined sequence may be a random data symbol, for example, may be a random data symbol modulated in a manner such as quadrature phase shift keying (quadrature phase shift keying, QPSK) or 16 quadrature amplitude modulation (quadrature amplitude modulation, QAM).

It should be understood that, that at least two sensing signals included in the K sensing signals occupy different frequency domain resources in the first time-frequency resource may be understood as follows: At least two of the K sensing signals occupy different frequency domain resources in the first time-frequency resource, and other sensing signals, in the K sensing signals, other than the two sensing signals may occupy a same frequency domain resource or different frequency domain resources in the first time-frequency resource. This is not limited in this application.

It should be understood that a quantity of sensing signals in one slot is a quantity of time domain symbols included in the first time-frequency resource in time domain. In other words, each sensing signal occupies one frequency domain resource in one time domain symbol in the first time-frequency resource.

It should be understood that the quantity K of sensing signals in one slot may be greater than or equal to the quantity M of frequency domain resources that do not overlap each other and that are included in the first time-frequency resource.

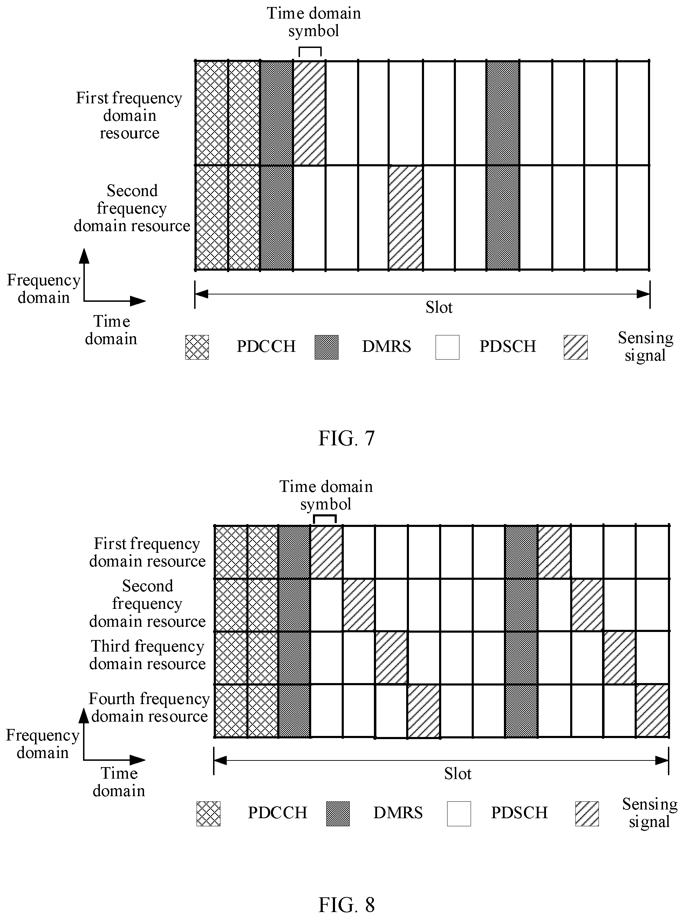

For example, in a first time-frequency resource shown in FIG. 7, when a quantity K of sensing signals in one slot of the first time-frequency resource is 2, and a quantity M of frequency domain resources that do not overlap each other and that are included in the first time-frequency resource is 2, K is equal to M.

For example, in a first time-frequency resource shown in FIG. 8, when a quantity K of sensing signals in one slot of the first time-frequency resource is 8, and a quantity M of frequency domain resources that do not overlap each other and that are included in the first time-frequency resource is 4, K is greater than M.

Optionally, the M frequency domain resources included in the first time-frequency resource in frequency domain are consecutive in frequency domain.

It should be understood that, that the M frequency domain resources are consecutive in frequency domain may be understood as that each of the M frequency domain resources is a segment of consecutive frequency domain resources.

Optionally, the first time-frequency resource is a segment of consecutive frequency domain resources in frequency domain.

It should be understood that, that the first time-frequency resource is a segment of consecutive frequency domain resources in frequency domain may be understood as that a union set of the M frequency domain resources included in the first time-frequency resource in frequency domain forms a segment of consecutive frequency domain resources.

Optionally, the slot includes S time domain symbols, in the first time-frequency resource, K=L×M, L is a positive integer, a k^{th} sensing signal and a (k+M)^{th} sensing signal in the K sensing signals carried in the first time-frequency resource occupy a same frequency domain resource and are separated by C time domain symbols, S is a positive integer greater than K, and C is a positive integer not greater than S/L.

It should be understood that the first time-frequency resource includes K time domain symbols in time domain. The k^{th} sensing signal in the K sensing signals occupies a k^{th} time domain symbol in the K time domain symbols in time domain.

It should be understood that, that a k^{th} sensing signal and a (k+M)^{th} sensing signal in the K sensing signals occupy a same frequency domain resource and are separated by C time domain symbols may be understood as that an absolute value of a difference between indexes/numbers of time domain symbols occupied by the (k+M)^{th} sensing signal and the k^{th} sensing signal in the slot is C, in other words, the two time domain symbols are separated by C time domain symbols. It may also be understood that, on a same frequency domain resource, an absolute value of a difference between indexes/numbers of two adjacent time domain symbols that carry sensing signals (that is, the (k+M)^{th} sensing signal and the k^{th} sensing signal) in the slot is C, in other words, the two time domain symbols are separated by C time domain symbols.

For example, as shown in FIG. 8, the slot includes 14 time domain symbols, that is, S is 14, and indexes of the 14 time domain symbols are respectively {0, 1, 2, 3, 4, 5, 6, 7, 8, 9, 10, 11, 12, 13}. In the first time-frequency resource shown in FIG. 8, the quantity of sensing signals is 8, that is, K is 8, and the quantity of frequency domain resources is 4, that is, M is 4. In this case, K=L×M, that is, 8=2×4. Indexes of time domain symbols occupied by the eight sensing signals in time domain are respectively {3, 4, 5, 6, 10, 11, 12, 13}. A 1^{st} sensing signal in the eight sensing signals occupies a 1^{st} time domain symbol in the eight time domain symbols in time domain, that is, a time domain symbol corresponding to the index 3. A 2^{nd} sensing signal in the eight sensing signals occupies a 2^{nd} time domain symbol in the eight time domain symbols in time domain, that is, a time domain symbol corresponding to the index 4, and so on. The k^{th} sensing signal and the (k+M)^{th} sensing signal in the K sensing signals occupy a same frequency domain resource and are separated by C time domain symbols. For example, in the eight sensing signals, the 1^{st} sensing signal and a 5^{th} sensing signal occupy a same frequency domain resource and are separated by seven time domain symbols, in other words, a difference between indexes/numbers of time domain symbols occupied by the 5^{th} sensing signal (which occupies a time domain symbol whose index/number is 10 in the slot) and the 1^{st} sensing signal (which occupies a time domain symbol whose index/number is 3 in the slot) in the slot is 7 (10-3=7), that is, C=7. C is a positive integer not greater than S/L, that is, 7 is not greater than 14/2.

Optionally, the first time-frequency resource does not overlap a control channel resource configured by the network device.

The control channel resource configured by the network device may be a time-frequency resource occupied by a PDCCH of a terminal device served by the network device. This is not limited in this application.

It should be understood that, that the first time-frequency resource does not overlap a control channel resource configured by the network device may be understood as that the first time-frequency resource does not occupy the control channel resource, or may be understood as that the first time-frequency resource does not occupy the time-frequency resource occupied by the PDCCH of the terminal device served by the network device. In other words, as shown in FIG. 7 and FIG. 8, the first time-frequency resource does not overlap the time-frequency resource occupied by the PDCCH. This is not limited in this application.

Specifically, the first information includes at least one of the following:
a frequency hopping period, a frequency hopping location, a frequency hopping bandwidth, or indexes of the time domain symbols that carry the K sensing signals.

The frequency hopping period is the C time domain symbols.

The frequency hopping location is locations of the M frequency domain resources.

The frequency hopping bandwidth indicates bandwidths of the M frequency domain resources.

That the frequency hopping location is locations of the M frequency domain resources means that the frequency hopping location includes the locations of the M frequency domain resources. A location of a specific frequency domain resource may be understood as a location of the frequency domain resource in frequency domain, for example, a frequency of a start subcarrier, a center subcarrier, or an end subcarrier of the frequency domain resource, for another example, a number of a common resource block corresponding to a start resource block, a center resource block, or an end resource block (resource block, RB) of the frequency domain resource. This is not limited in this application.

That the frequency hopping bandwidth indicates bandwidths of the M frequency domain resources may be understood as that the frequency hopping bandwidth includes the bandwidths of the M frequency domain resources, in other words, the bandwidths of the M frequency domain resources are not completely the same. For example, the frequency hopping bandwidth may be represented by frequency domain widths respectively occupied by the M frequency domain resources (where for example, frequency domain widths occupied by four frequency domain resources are respectively 10 MHz, 20 MHz, 30 MHz, and 40 MHz). For another example, the frequency hopping bandwidth may be represented by quantities of RBs respectively occupied by the M frequency domain resources (where for example, quantities of RBs occupied by four frequency domain resources are 10, 20, 30, and 40). It may also be understood that the frequency hopping bandwidth includes a bandwidth of one frequency domain resource, in other words, each of the M frequency domain resources has a same bandwidth. For example, the frequency hopping bandwidth may be represented by a frequency domain width occupied by each frequency domain resource (where for example, a bandwidth of each of four frequency domain resources is 25 MHz). For another example, the frequency hopping bandwidth may be represented by a quantity of RBs occupied by each frequency domain resource (where for example, a quantity of RBs of each of four frequency domain resources is 25).

For ease of understanding, the following specifically describes the first time-frequency resource and the first information with reference to FIG. 8.

FIG. 8 shows a first time-frequency resource in a scenario of a single time domain symbol DMRS and one additional DMRS. To be specific, a PDCCH of the terminal device occupies the first two time domain symbols in one slot, a front loaded DMRS (front loaded DMRS) of a PDSCH of the terminal device occupies one time domain symbol and the occupied time domain symbol is a time domain symbol whose index is 2 in the slot, and an additional DMRS (additional DMRS) of the PDSCH of the terminal device occupies a time domain symbol whose index is 9 in the slot.

The first time-frequency resource shown in FIG. 8 is a time-frequency resource that carries eight sensing signals in one slot. The first time-frequency resource includes eight time domain symbols that carry the sensing signals in time domain, that is, K is 8. The first time-frequency resource includes four frequency domain resources that do not overlap each other in frequency domain, that is, M is 4.

Optionally, the frequency hopping period in the first information is the C time domain symbols. It should be understood that the frequency hopping period is a quantity of time domain symbols that are between two adjacent time domain symbols that carry sensing signals and that are on one frequency domain resource.

Specifically, the frequency hopping period in the first information is seven time domain symbols.

The slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource is seven time domain symbols. To be specific, on one frequency domain resource, there are seven time domain symbols between two adjacent time domain symbols that carry sensing signals, that is, C is 7. K=L×M, that is, 8=2×4. C is a positive integer not greater than S/L, that is, 7 is equal to 14/2. In other words, in the first time-frequency resource, a k^{th} sensing signal and a (k+M)^{th} sensing signal in the K sensing signals occupy a same frequency domain resource and are separated by seven time domain symbols. In other words, an absolute value of a difference between indexes/numbers of time domain symbols occupied by the (k+M)^{th} sensing signal and the k^{th} sensing signal in the slot is 7. For example, in the eight sensing signals, a 1^{st} sensing signal and a 5^{th} sensing signal occupy a same frequency domain resource and are separated by seven time domain symbols. It may be understood that a difference between indexes/numbers of time domain symbols occupied by the 5^{th} sensing signal (which occupies a time domain symbol whose index/number is 10 in the slot) and the 1^{st} sensing signal (which occupies a time domain symbol whose index/number is 3 in the slot) in the slot is 7 (10-3=7), that is, C=7.

The frequency hopping location in the first information is locations of the four frequency domain resources, that is, a location of a first frequency domain resource, a location of a second frequency domain resource, a location of a third frequency domain resource, and a location of a fourth frequency domain resource in FIG. 8.

It should be understood that, for all time domain symbols included in the slot, each time domain symbol includes the locations of the four frequency domain resources. To be specific, each time domain symbol includes the location of the first frequency domain resource, the location of the second frequency domain resource, the location of the third frequency domain resource, and the location of the fourth frequency domain resource.

For example, a reference point A (point A) is located at a subcarrier location 0 of a common resource block 0 (common resource block, CRB). For example, the location of the first frequency domain resource is an offset of a 1^{st} subcarrier location in the first frequency domain resource relative to the reference point A, the location of the second frequency domain resource is an offset of a 1^{st} subcarrier location in the second frequency domain resource relative to the reference point A, and the location of the third frequency domain resource is an offset of a 1^{st} subcarrier location in the third frequency domain resource relative to the reference point A, and the location of the fourth frequency domain resource is an offset of a 1^{st} subcarrier location in the fourth frequency domain resource relative to the reference point A.

The frequency hopping bandwidth in the first information indicates bandwidths of the four frequency domain resources. For example, in the first time-frequency resource shown in FIG. 8, a bandwidth of the first frequency domain resource is 25 MHz, a bandwidth of the second frequency domain resource is 25 MHz, a bandwidth of the third frequency domain resource is 25 MHz, and a bandwidth of the fourth frequency domain resource is 25 MHz.

For example, a frequency domain range occupied by the first frequency domain resource, that is, 0 MHz to 25 MHz, may be determined based on the location of the first frequency domain resource (the offset of the 1^{st} subcarrier location in the first frequency domain resource relative to the reference point A) and the bandwidth of the first frequency domain resource. A frequency domain range occupied by the second frequency domain resource, that is, 25 MHz to 50 MHz, may be determined based on the location of the second frequency domain resource (the offset of the 1^{st} subcarrier location in the second frequency domain resource relative to the reference point A) and the bandwidth of the second frequency domain resource. A frequency domain range occupied by the third frequency domain resource, that is, 50 MHz to 75 MHz, may be determined based on the location of the third frequency domain resource (the offset of the 3^{rd} subcarrier location in the third frequency domain resource relative to the reference point A) and the bandwidth of the third frequency domain resource. A frequency domain range occupied by the fourth frequency domain resource, that is, 75 MHz to 100 MHz, may be determined based on the location of the fourth frequency domain resource (the offset of the 1^{st} subcarrier location in the fourth frequency domain resource relative to the reference point A) and the bandwidth of the fourth frequency domain resource.

Indexes of the time domain symbols that carry the eight sensing signals in the first information are {3, 4, 5, 6, 10, 11, 12, 13}, that is, locations of the time domain symbols that carry the eight sensing signals in FIG. 8.

It should be noted that the foregoing descriptions of the first time-frequency resource and the first information with reference to FIG. 8 are merely examples. This is not limited in this application.

S520: The network device sends the first information to a first device.

Correspondingly, the first device receives the first information from the network device.

Optionally, the first device is an IAB node (IAB node), and the network device is a donor node.

In a possible implementation, the network device may send the first information to the first device through a radio link.

S530: The first device sends the K sensing signals on the first time-frequency resource based on the first information.

It should be understood that after receiving the first information from the network device, the first device sends the K sensing signals on the first time-frequency resource based on the first information.

Specifically, the K sensing signals are separately sent, based on the time-frequency resource that carries the K sensing signals in one slot and that is indicated by the first information, on the time-frequency resource that carries the K sensing signals.

Based on the foregoing solution, the IAB node (the first device) multiplexes a time-frequency resource with a communication base station in a frequency hopping manner. The IAB node sends a plurality of sensing signals on an allocated frequency-hopping time-frequency resource, and receives echo signals of the plurality of sensing signals, so that a sensing coverage capability of the IAB node can be improved without reducing a range resolution capability/range precision.

Further, after the network device determines the first information, the network device sends second information to the terminal device. The method 500 may further include S540.

S540: The network device sends the second information to the terminal device.

Correspondingly, the terminal device receives the second information from the network device.

The second information indicates a time-frequency resource that does not carry a PDSCH of the terminal device.

Specifically, the time-frequency resource that does not carry the PDSCH of the terminal device includes a time-frequency resource occupied by at least one of the K sensing signals. In other words, the time-frequency resource that does not carry the PDSCH of the terminal device includes a subset of time-frequency resources (the first time-frequency resource) occupied by the K sensing signals.

It should be understood that, that the second information indicates a time-frequency resource that does not carry a PDSCH of the terminal device may be understood as that a resource element (resource element, RE) indicated by the second information is not used to carry the PDSCH of the terminal device.

In a possible implementation, the network device includes the second information in rate matching (rate match pattern) signaling, and sends the rate matching signaling to the terminal device.

It should be noted that a sequence of performing S520 and S540 by the network device is not limited in this application. For example, S540 and S520 may be performed at the same time, S540 may be performed before S52, or S540 may be performed after S520.

Further, for the K sent sensing signals, echo signals corresponding to the K sensing signals are received, and based on different devices for receiving the echo signals of the sensing signals, the method 500 may further include the following steps.

Manner 1: When the first device receives the echo signal of the sensing signal, in other words, a same device is used to send the sensing signal and receive the echo signal of the sensing signal, the method 500 may further include S550.

S550: The first device receives the echo signal of the sensing signal on the first time-frequency resource based on the first information.

Specifically, the first device receives the echo signal of the sensing signal on the first time-frequency resource based on the time-frequency resource that carries the K sensing signals and that is indicated by the first information.

It should be understood that the echo signal of the sensing signal received by the first device on the first time-frequency resource may be K echo signals corresponding to the K sensing signals, or may be echo signals corresponding to some of the K sensing signals. A quantity of echo signals of the sensing signal received by the first device on the first time-frequency resource based on the first information is not limited in this application.

Manner 2: When a second device receives the echo signal of the sensing signal, in other words, different devices are used to send the sensing signal and receive the echo signal of the sensing signal, the method 500 may further include S560 and S570.

S560: The network device sends the first information to the second device.

Correspondingly, the second device receives the first information from the network device.

The second device is an IAB node.

Specifically, after determining the first information, the network device sends the first information to the second device.

It should be noted that, for descriptions of the first information, refer to the descriptions in S510. To avoid repetition, detailed descriptions are omitted herein.

S570: The second device receives the echo signal of the sensing signal from the first device on the first time-frequency resource based on the first information.

Specifically, the second device receives the echo signal of the sensing signal from the first device on the time-frequency resource that carries the K sensing signals and that is indicated by the first information.

It should be understood that the echo signal of the sensing signal received by the second device on the first time-frequency resource may be K echo signals corresponding to the K sensing signals, or may be echo signals corresponding to some of the K sensing signals. A quantity of echo signals of the sensing signal received by the second device on the first time-frequency resource based on the first information is not limited in this application.

FIG. 6 is a diagram of a communication method 600 according to an embodiment of this application. For FIG. 6, refer to the descriptions of FIG. 5. The method 600 may include the following steps.

S601: A network device determines first information.

The first information indicates a first time-frequency resource.

Specifically, the first time-frequency resource is a time-frequency resource that carries K sensing signals in one slot. The first time-frequency resource includes K time domain symbols in time domain. The first time-frequency resource includes M frequency domain resources that do not overlap each other in frequency domain. At least two sensing signals included in the K sensing signals occupy different frequency domain resources in the first time-frequency resource. K and M are positive integers, K is greater than or equal to M, and K is greater than or equal to 2.

The sensing signal is used for sensing, and the sensing signal may also be referred to as a sounding signal, an integrated sensing and communication signal, or the like. This is not limited in this application.

It should be noted that, for the first information in S601, refer to the descriptions in S510.

Optionally, the slot includes S time domain symbols, in the first time-frequency resource, K=L×M, L is a positive integer, a k^{th} sensing signal and a (k+M)^{th} sensing signal in the K sensing signals in the first time-frequency resource occupy a same frequency domain resource and are separated by C time domain symbols, S is a positive integer greater than K, and C is a positive integer less than or equal to, that is, not greater than S/L.

It should be understood that, that a k^{th} sensing signal and a (k+M)^{th} sensing signal in the K sensing signals occupy a same frequency domain resource and are separated by C time domain symbols may be understood as that an absolute value of a difference between indexes/numbers of time domain symbols occupied by the (k+M)^{th} sensing signal and the k^{th} sensing signal in the slot is C, in other words, the two time domain symbols are separated by C time domain symbols. It may also be understood that, on a same frequency domain resource, an absolute value of a difference between indexes/numbers of two adjacent time domain symbols that carry sensing signals (that is, the (k+M)^{th} sensing signal and the k^{th} sensing signal) in the slot is C, in other words, the two time domain symbols are separated by C time domain symbols.

Specifically, the first information includes at least one of the following:
a frequency hopping period, a frequency hopping location, a frequency hopping bandwidth, or indexes of the time domain symbols that carry the K sensing signals.

The frequency hopping period is the C time domain symbols.

The frequency hopping location is locations of the M frequency domain resources.

The frequency hopping bandwidth indicates bandwidths of the M frequency domain resources.

It should be noted that, the time-frequency resource that carries the sensing signal is first a downlink resource, and is not a resource that is in the downlink resource and that carries a physical downlink control channel (physical downlink control channel, PDCCH) signal and a demodulation reference signal (demodulation reference signal, DMRS) of a physical downlink shared channel (physical downlink shared channel, PDSCH) of a terminal device. Therefore, to satisfy a typical PDCCH and DMRS configuration solution in an existing NR protocol, a frequency hopping pattern, that is, the first time-frequency resource, used to send a sensing signal in one slot is designed in this application, as shown in FIG. 8 to FIG. 12. When each first time-frequency resource satisfies a constraint condition (that is, not the resource that is in the downlink resource and that carries the PDCCH signal and the DMRS signal of the PDSCH of the terminal device), a quantity of time domain symbols included in the first time-frequency resource is maximized, in other words, a first device can send a maximum quantity of sensing signals in one slot, so that most echo signal energy is accumulated in coherence time, to improve a sensing coverage capability of the first device.

For example, the following specifically describes a plurality of first time-frequency resources with reference to FIG. 8 to FIG. 12.

FIG. 8 shows a first time-frequency resource in a scenario of a single time domain symbol DMRS and one additional DMRS. To be specific, a PDCCH of the terminal device occupies the first two time domain symbols in one slot, a front loaded DMRS (front loaded DMRS) of a PDSCH of the terminal device occupies one time domain symbol and the occupied time domain symbol is a time domain symbol whose index is 2 in the slot, and an additional DMRS (additional DMRS) of the PDSCH of the terminal device occupies a time domain symbol whose index is 9 in the slot.

The first time-frequency resource shown in FIG. 8 is a time-frequency resource that carries eight sensing signals in one slot. The first time-frequency resource includes eight time domain symbols in time domain, that is, K is 8. The first time-frequency resource includes four frequency domain resources that do not overlap each other in frequency domain, that is, M is 4. K=L×M, that is, 8=2×4.

The frequency hopping period in the first information is seven time domain symbols.

It should be understood that, that the frequency hopping period is seven time domain symbols may be understood as that a k^{th} sensing signal and a (k+M)^{th} sensing signal in the K sensing signals in the first time-frequency resource occupy a same frequency domain resource and are separated by seven time domain symbols.

Specifically, the slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource shown in FIG. 8 is seven time domain symbols. To be specific, on one frequency domain resource, there are seven time domain symbols between two adjacent time domain symbols that carry sensing signals, that is, C is 7, and C is a positive integer not greater than S/L, that is, 7 is equal to 14/2. It may also be understood that an absolute value of a difference between indexes/numbers of two adjacent time domain symbols that carry sensing signals in the slot is 7. For example, in the eight sensing signals, a 1^{st} sensing signal and a 5^{th} sensing signal occupy a same frequency domain resource and are separated by seven time domain symbols. It may also be understood that a difference between indexes/numbers of time domain symbols occupied by the 5^{th} sensing signal (which occupies a time domain symbol whose index/number is 10 in the slot) and the 1^{st} sensing signal (which occupies a time domain symbol whose index/number is 3 in the slot) in the slot is 7 (10-3=7), that is, C=7.

The frequency hopping location in the first information is locations of the four frequency domain resources, that is, a location of a first frequency domain resource, a location of a second frequency domain resource, a location of a third frequency domain resource, and a location of a fourth frequency domain resource in FIG. 8.

It should be understood that, for all time domain symbols included in the slot, each time domain symbol includes the locations of the four frequency domain resources. To be specific, each time domain symbol includes the location of the first frequency domain resource, the location of the second frequency domain resource, the location of the third frequency domain resource, and the location of the fourth frequency domain resource.

The frequency hopping bandwidth in the first information indicates bandwidths of the four frequency domain resources. For example, in the first time-frequency resource shown in FIG. 8, a bandwidth of the first frequency domain resource is 25 MHz, a bandwidth of the second frequency domain resource is 25 MHz, a bandwidth of the third frequency domain resource is 25 MHz, and a bandwidth of the fourth frequency domain resource is 25 MHz.

Indexes of the time domain symbols that carry the eight sensing signals in the first information are {3, 4, 5, 6, 10, 11, 12, 13}, that is, locations of the time domain symbols that carry the eight sensing signals in FIG. 8.

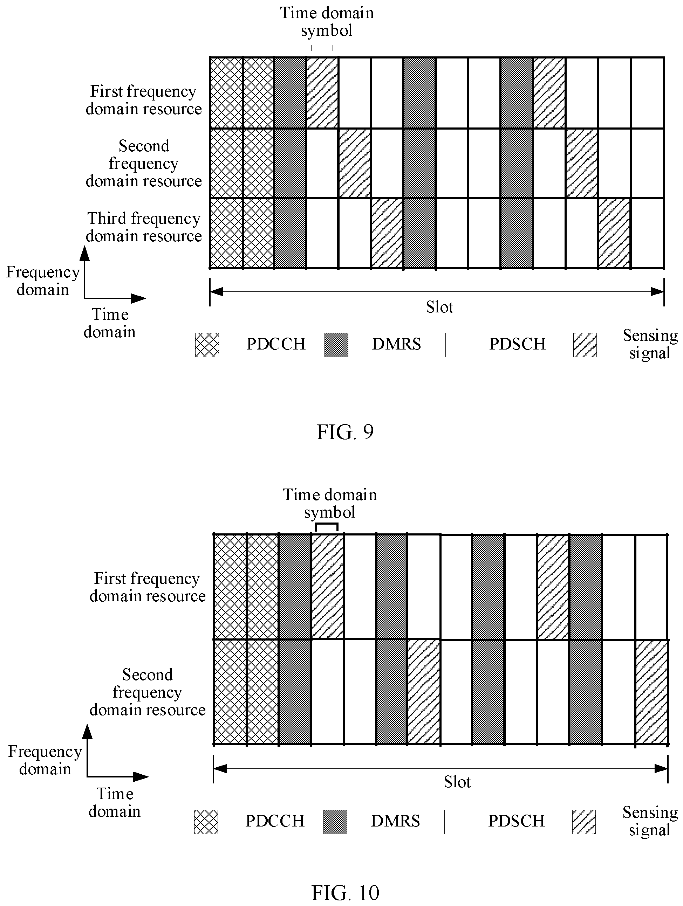

FIG. 9 shows a first time-frequency resource in a scenario of a single time domain symbol DMRS and two additional DMRSs. To be specific, a PDCCH of the terminal device occupies the first two time domain symbols in one slot, a front loaded DMRS of a PDSCH of the terminal device occupies one time domain symbol and the occupied time domain symbol is a time domain symbol whose index is 2 in the slot, and additional DMRSs of the PDSCH of the terminal device occupy two time domain symbols whose indexes are 6 and 9 in the slot.

The first time-frequency resource is a time-frequency resource that carries six sensing signals in one slot. The first time-frequency resource includes six time domain symbols in time domain, that is, K is 6. The first time-frequency resource includes three frequency domain resources that do not overlap each other in frequency domain, that is, M is 3. K=L×M, that is, 6=2×3.

The frequency hopping period in the first information is seven time domain symbols.

It should be understood that, that the frequency hopping period is seven time domain symbols may be understood as that a k^{th} sensing signal and a (k+M)^{th} sensing signal in the K sensing signals in the first time-frequency resource occupy a same frequency domain resource and are separated by seven time domain symbols.

Specifically, the slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource shown in FIG. 9 is seven time domain symbols. To be specific, on one frequency domain resource, there are seven time domain symbols between two adjacent time domain symbols that carry sensing signals, that is, C is 7, and C is a positive integer not greater than S/L, that is, 7 is equal to 14/2. It may also be understood that an absolute value of a difference between indexes/numbers of two adjacent time domain symbols that carry sensing signals in the slot is 7. For example, in the six sensing signals, a 1^{st} sensing signal and a 4^{th} sensing signal occupy a same frequency domain resource and are separated by seven time domain symbols. It may also be understood that a difference between indexes/numbers of time domain symbols occupied by the 4^{th} sensing signal (which occupies a time domain symbol whose index/number is 10 in the slot) and the 1^{st} sensing signal (which occupies a time domain symbol whose index/number is 3 in the slot) in the slot is 7 (10-3=7), that is, C=7.

The frequency hopping location in the first information is locations of the three frequency domain resources, that is, a location of a first frequency domain resource, a location of a second frequency domain resource, and a location of a third frequency domain resource in FIG. 9.

It should be understood that, for all time domain symbols included in the slot, each time domain symbol includes the locations of the three frequency domain resources. To be specific, each time domain symbol includes the location of the first frequency domain resource, the location of the second frequency domain resource, and the location of the third frequency domain resource.

The frequency hopping bandwidth in the first information indicates bandwidths of the three frequency domain resources. For example, in the first time-frequency resource shown in FIG. 9, a bandwidth of the first frequency domain resource is 33 MHz, a bandwidth of the second frequency domain resource is 33 MHz, and a bandwidth of the third frequency domain resource is 33 MHz.

Indexes of the time domain symbols that carry the six sensing signals in the first information are {3, 4, 5, 10, 11, 12}, that is, locations of the time domain symbols that carry the six sensing signals in FIG. 9.

FIG. 10 shows a first time-frequency resource in a scenario of a single time domain symbol DMRS and three additional DMRSs. To be specific, a PDCCH of a terminal device occupies first two time domain symbols in one slot, a front loaded DMRS of a PDSCH of the terminal device occupies one time domain symbol and the occupied time domain symbol is a time domain symbol whose index is 2 in the slot, and additional DMRSs of the PDSCH of the terminal device occupy three time domain symbols whose indexes are 5, 8, and 11 in the slot.

The first time-frequency resource is a time-frequency resource that carries four sensing signals in one slot. The first time-frequency resource includes four time domain symbols in time domain, that is, K is 4. The first time-frequency resource includes two frequency domain resources that do not overlap each other in frequency domain, that is, M is 2. K=L×M, that is, 4=2×2.

The frequency hopping period in the first information is seven time domain symbols.

It should be understood that, that the frequency hopping period is seven time domain symbols may be understood as that a k^{th} sensing signal and a (k+M)^{th} sensing signal in the K sensing signals in the first time-frequency resource occupy a same frequency domain resource and are separated by seven time domain symbols.

Specifically, the slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource shown in FIG. 10 is seven time domain symbols. To be specific, on one frequency domain resource, there are seven time domain symbols between two adjacent time domain symbols that carry sensing signals, that is, C is 7, and C is a positive integer not greater than S/L, that is, 7 is equal to 14/2. It may also be understood that an absolute value of a difference between indexes/numbers of two adjacent time domain symbols that carry sensing signals in the slot is 7. For example, in the four sensing signals, a 1^{st} sensing signal and a 3^{rd} sensing signal occupy a same frequency domain resource and are separated by seven time domain symbols. It may also be understood that a difference between indexes/numbers of time domain symbols occupied by the 3^{rd} sensing signal (which occupies a time domain symbol whose index/number is 10 in the slot) and the 1^{st} sensing signal (which occupies a time domain symbol whose index/number is 3 in the slot) in the slot is 7 (10-3=7), that is, C=7.

The frequency hopping location in the first information is locations of the two frequency domain resources, that is, a location of a first frequency domain resource and a location of a second frequency domain resource in FIG. 10.

It should be understood that, for all time domain symbols included in the slot, each time domain symbol includes the locations of the two frequency domain resources. To be specific, each time domain symbol includes the location of the first frequency domain resource and the location of the second frequency domain resource.

The frequency hopping bandwidth in the first information indicates bandwidths of the two frequency domain resources. For example, in the first time-frequency resource shown in FIG. 10, a bandwidth of the first frequency domain resource is 50 MHz, and a bandwidth of the second frequency domain resource is 50 MHz.

Indexes of the time domain symbols that carry the four sensing signals in the first information are {3, 6, 10, 13}, that is, locations of the time domain symbols that carry the four sensing signals in FIG. 10.

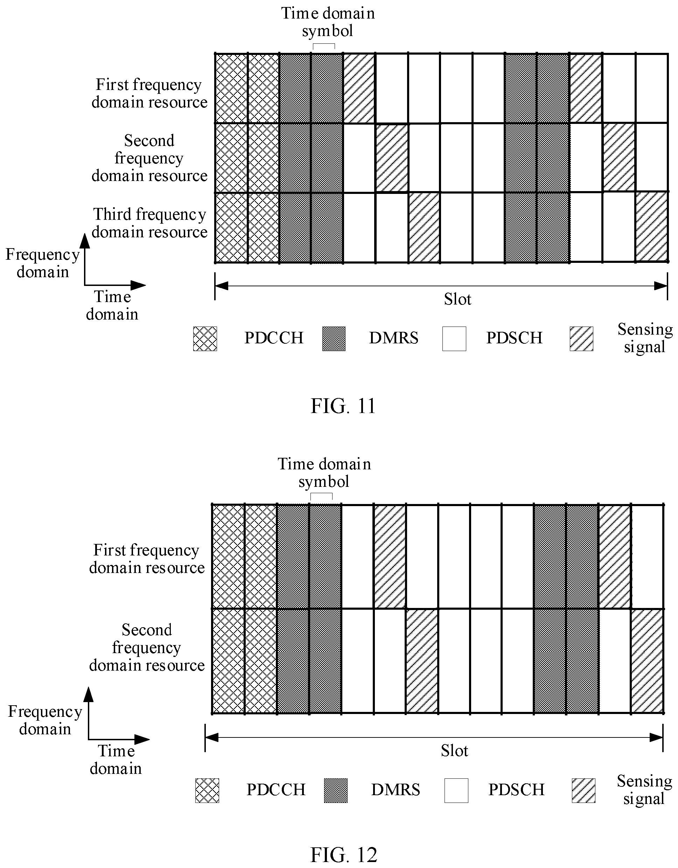

FIG. 11 shows a first time-frequency resource in a scenario of a double time domain symbol DMRS and one additional DMRS. To be specific, a PDCCH of a terminal device occupies first two time domain symbols in one slot, a front loaded DMRS of a PDSCH of the terminal device occupies two time domain symbols whose indexes are 2 and 3 in the slot, and an additional DMRS of the PDSCH of the terminal device occupies two time domain symbols whose indexes are 8 and 9 in the slot.

The first time-frequency resource is a time-frequency resource that carries six sensing signals in one slot. The first time-frequency resource includes six time domain symbols in time domain, that is, K is 6. The first time-frequency resource includes three frequency domain resources that do not overlap each other in frequency domain, that is, M is 3. K=L×M, that is, 6=2×3.

The frequency hopping period in the first information is seven time domain symbols.

It should be understood that, that the frequency hopping period is seven time domain symbols may be understood as that a k^{th} sensing signal and a (k+M)^{th} sensing signal in the K sensing signals in the first time-frequency resource occupy a same frequency domain resource and are separated by seven time domain symbols.

Specifically, the slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource shown in FIG. 11 is seven time domain symbols. To be specific, on one frequency domain resource, there are seven time domain symbols between two adjacent time domain symbols that carry sensing signals, that is, C is 7, and C is a positive integer not greater than S/L, that is, 7 is equal to 14/2. It may also be understood that an absolute value of a difference between indexes/numbers of two adjacent time domain symbols that carry sensing signals in the slot is 7. For example, in the six sensing signals, a 1^{st} sensing signal and a 4^{th} sensing signal occupy a same frequency domain resource and are separated by seven time domain symbols. It may also be understood that a difference between indexes/numbers of time domain symbols occupied by the 4^{th} sensing signal (which occupies a time domain symbol whose index/number is 11 in the slot) and the 1^{st} sensing signal (which occupies a time domain symbol whose index/number is 4 in the slot) in the slot is 7 (11-4=7), that is, C=7.

The frequency hopping location in the first information is locations of the three frequency domain resources, that is, a location of a first frequency domain resource, a location of a second frequency domain resource, and a location of a third frequency domain resource in FIG. 11.

It should be understood that, for all time domain symbols included in the slot, each time domain symbol includes the locations of the three frequency domain resources. To be specific, each time domain symbol includes the location of the first frequency domain resource, the location of the second frequency domain resource, and the location of the third frequency domain resource.

The frequency hopping bandwidth in the first information indicates bandwidths of the three frequency domain resources. For example, in the first time-frequency resource shown in FIG. 11, a bandwidth of the first frequency domain resource is 33 MHz, a bandwidth of the second frequency domain resource is 33 MHz, and a bandwidth of the third frequency domain resource is 33 MHz.

Indexes of the time domain symbols that carry the six sensing signals in the first information are {4, 5, 6, 11, 12, 13}, that is, locations of the time domain symbols that carry the six sensing signals in FIG. 11.

FIG. 12 shows a first time-frequency resource in a scenario of a double time domain symbol DMRS and two additional DMRSs. To be specific, a PDCCH of a terminal device occupies first two time domain symbols in one slot, a front loaded DMRS of a PDSCH of the terminal device occupies two time domain symbols whose indexes are 2 and 3 in the slot, and additional DMRSs of the PDSCH of the terminal device occupy two time domain symbols whose indexes are 10 and 11 in the slot.

The first time-frequency resource is a time-frequency resource that carries four sensing signals in one slot. The first time-frequency resource includes four time domain symbols in time domain, that is, K is 4. The first time-frequency resource includes two frequency domain resources that do not overlap each other in frequency domain, that is, M is 2. K=L×M, that is, 4=2×2.

The frequency hopping period in the first information is seven time domain symbols.

It should be understood that, that the frequency hopping period is seven time domain symbols may be understood as that a k^{th} sensing signal and a (k+M)^{th} sensing signal in the K sensing signals in the first time-frequency resource occupy a same frequency domain resource and are separated by seven time domain symbols.

Specifically, the slot includes 14 time domain symbols, that is, S is 14, and indexes of the 14 time domain symbols are respectively {0, 1, 2, 3, 4, 5, 6, 7, 8, 9, 10, 11, 12, 13}. The frequency hopping period of the first time-frequency resource shown in FIG. 12 is seven time domain symbols. To be specific, on one frequency domain resource, there are seven time domain symbols between two adjacent time domain symbols that carry sensing signals, that is, C is 7, and C is a positive integer not greater than S/L, that is, 7 is equal to 14/2. It may also be understood that an absolute value of a difference between indexes/numbers of two adjacent time domain symbols that carry sensing signals in the slot is 7. For example, in the four sensing signals, a 1^{st} sensing signal and a 3^{rd} sensing signal occupy a same frequency domain resource and are separated by seven time domain symbols. It may also be understood that a difference between indexes/numbers of time domain symbols occupied by the 3^{rd} sensing signal (which occupies a time domain symbol whose index/number is 12 in the slot) and the 1^{st} sensing signal (which occupies a time domain symbol whose index/number is 5 in the slot) in the slot is 7 (12-5=7), that is, C=7.

The frequency hopping location in the first information is locations of the two frequency domain resources, that is, a location of a first frequency domain resource and a location of a second frequency domain resource in FIG. 12.

It should be understood that, for all time domain symbols included in the slot, each time domain symbol includes the locations of the two frequency domain resources. To be specific, each time domain symbol includes the location of the first frequency domain resource and the location of the second frequency domain resource.

The frequency hopping bandwidth in the first information indicates bandwidths of the two frequency domain resources. For example, in the first time-frequency resource shown in FIG. 12, a bandwidth of the first frequency domain resource is 50 MHz, and a bandwidth of the second frequency domain resource is 50 MHz.

Indexes of the time domain symbols that carry the four sensing signals in the first information are {5, 6, 12, 13}, that is, locations of the time domain symbols that carry the four sensing signals in FIG. 12.

It should be noted that the first time-frequency resources shown in FIG. 8 to FIG. 12 are merely examples. This is not limited in this application.

S602: The network device sends the first information to the first device.

Correspondingly, the first device receives the first information from the network device.

Optionally, the first device is an IAB node.

In a possible implementation, the network device may send the first information to the first device through a radio link.

S603: The network device sends second information to the terminal device.

Correspondingly, the terminal device receives the second information from the network device.

The second information indicates a time-frequency resource that does not carry a PDSCH of the terminal device.

Specifically, the time-frequency resource that does not carry the PDSCH of the terminal device includes a time-frequency resource occupied by at least one of the K sensing signals. In other words, the time-frequency resource that does not carry the PDSCH of the terminal device includes a subset of time-frequency resources (the first time-frequency resource) occupied by the K sensing signals. To be specific, as shown in FIG. 8 to FIG. 12, the time-frequency resource that does not carry the PDSCH of the terminal device is a time-frequency resource that is occupied by at least one sensing signal and that is in the first time-frequency resource.

It should be understood that, that the second information indicates a time-frequency resource that does not carry a PDSCH of the terminal device may be understood as that a resource element (resource element, RE) indicated by the second information is not used to carry the PDSCH of the terminal device.

In a possible implementation, the network device includes the second information in rate matching (rate match pattern) signaling, and sends the rate matching signaling to the terminal device.

It should be noted that, because the sensing signal sent by the first device carries communication data that needs to be transmitted to the terminal device, the terminal device does not need to demodulate PDSCH data on the first time-frequency resource.

It should be noted that a sequence of S602 and S603 is not limited in this application. For example, the network device may send the first information to the first device and send the second information to the terminal device at the same time, in other words, S602 and S603 are performed at the same time. For another example, the network device may alternatively send the first information to the first device first, and then send the second information to the terminal device, in other words, S602 is performed first, and then S603 is performed. For another example, the network device may alternatively send the second information to the terminal device first, and then send the first information to the first device, in other words, S603 is performed first, and then S602 is performed. This is not limited in this application.

S604: The first device sends the K sensing signals on the first time-frequency resource based on the first information.

It should be understood that after receiving the first information from the network device, the first device sends the K sensing signals on the first time-frequency resource based on the first information.

Specifically, the K sensing signals are separately sent, based on the time-frequency resource that carries the K sensing signals in one slot and that is indicated by the first information, on the time-frequency resource that carries the K sensing signals.

S605: The first device receives an echo signal of the sensing signal on the first time-frequency resource based on the first information.

Specifically, the first device receives the echo signal of the sensing signal on the first time-frequency resource based on the time-frequency resource that carries the K sensing signals and that is indicated by the first information.

It should be understood that the echo signal of the sensing signal received by the first device on the first time-frequency resource may be K echo signals corresponding to the K sensing signals, or may be echo signals corresponding to some of the K sensing signals. A quantity of echo signals of the sensing signal received by the first device on the first time-frequency resource based on the first information is not limited in this application.

Based on the foregoing solution, the IAB node (the first device) sends the sensing signal and receives the echo signal in the slot in a frequency hopping manner, so that a quantity of sensing signals sent by the IAB node in the slot increases. Therefore, the IAB node accumulates more echo signal energy during sensing, to improve a sensing coverage capability of the IAB node. In addition, a union set of frequency domain resources occupied by all sensing signals is an entire bandwidth. This is equivalent to a case in which the IAB node uses the entire bandwidth to perform sensing. In this way, a sensing coverage capability of the IAB node can be improved without reducing a range resolution capability/range precision.

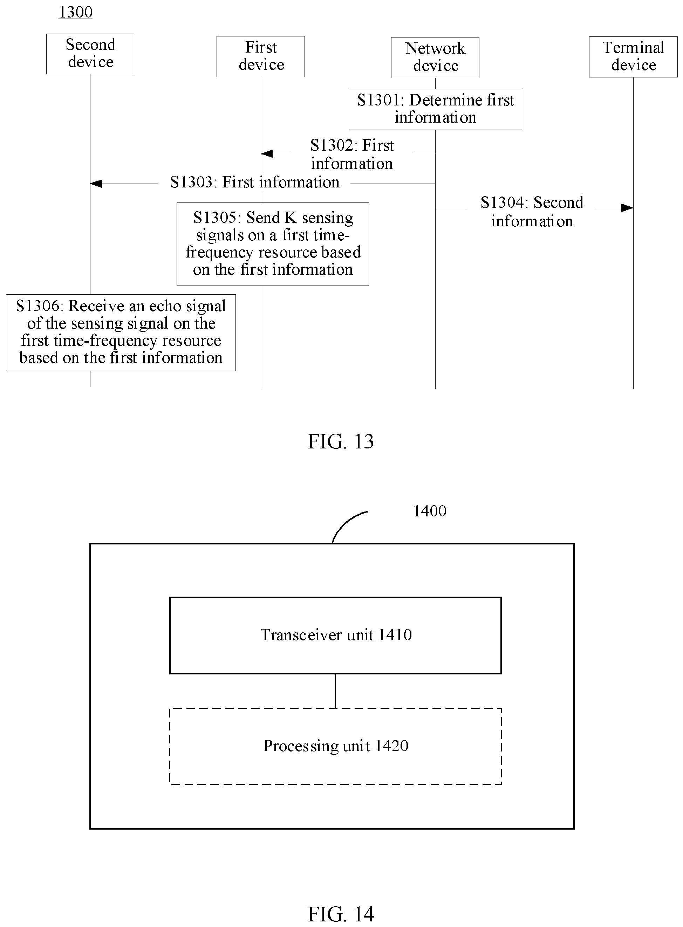

FIG. 13 is a diagram of a communication method 1300 according to an embodiment of this application. For FIG. 13, refer to the descriptions of FIG. 5 and FIG. 6. The method 1300 may include the following steps.

S1301: A network device determines first information.

The first information indicates a first time-frequency resource.

Specifically, the first time-frequency resource is a time-frequency resource that carries K sensing signals in one slot. The first time-frequency resource includes K time domain symbols in time domain. The first time-frequency resource includes M frequency domain resources that do not overlap each other in frequency domain. At least two sensing signals included in the K sensing signals occupy different frequency domain resources in the first time-frequency resource. K and M are positive integers, K is greater than or equal to M, and K is greater than or equal to 2.

The sensing signal is used for sensing, and the sensing signal may also be referred to as a sounding signal, an integrated sensing and communication signal, or the like. This is not limited in this application.

It should be noted that a process in which the network device determines the first information in S1301 is similar to a process in S601. To avoid repetition, detailed descriptions are omitted herein.

For example, for the first time-frequency resource, refer to descriptions in FIG. 7 to FIG. 12.

S1302: The network device sends the first information to a first device.

Correspondingly, the first device receives the first information from the network device.

Optionally, the first device is an IAB node.

In a possible implementation, the network device may send the first information to the first device through a radio link.

S1303: The network device sends the first information to a second device.

Correspondingly, the second device receives the first information from the network device.

Optionally, the second device is an IAB node.

In a possible implementation, the network device may send the first information to the second device through a radio link.

S1304: The network device sends second information to a terminal device.

Correspondingly, the terminal device receives the second information from the network device.

The second information indicates a time-frequency resource that does not carry a PDSCH of the terminal device.

Specifically, the time-frequency resource that does not carry the PDSCH of the terminal device includes a time-frequency resource occupied by at least one of the K sensing signals. In other words, the time-frequency resource that does not carry the PDSCH of the terminal device includes a subset of time-frequency resources (the first time-frequency resource) occupied by the K sensing signals. To be specific, as shown in FIG. 8 to FIG. 12, the time-frequency resource that does not carry the PDSCH of the terminal device is a time-frequency resource that is occupied by at least one sensing signal and that is in the first time-frequency resource.

It should be understood that, that the second information indicates a time-frequency resource that does not carry a PDSCH may be understood as that a resource element (resource element, RE) indicated by the second information is not used to carry the PDSCH of the terminal device.

In a possible implementation, the network device includes the second information in rate matching (rate match pattern) signaling, and sends the rate matching signaling to the terminal device.

It should be noted that, because the sensing signal sent by the first device carries communication data that needs to be transmitted to the terminal device, the terminal device does not need to demodulate PDSCH data on the first time-frequency resource.

It should be noted that a sequence of S1302, S1303, and S1304 is not limited in this application. For example, the network device may send the first information to the first device and the second device, and send the second information to the terminal device at the same time, in other words, S1302, S1303, and S1304 are performed at the same time. For another example, the network device may alternatively send the first information to the first device, send the first information to the second device, and send the second information to the terminal device in sequence, in other words, S1302, S1303, and S1304 are performed in sequence. For another example, the network device may alternatively send the second information to the terminal device, send the first information to the first device, and send the first information to the second device in sequence, in other words, S1304, S1302, S1303 are performed in sequence. This is not limited in this application.

S1305: The first device sends the K sensing signals on the first time-frequency resource based on the first information.

It should be understood that after receiving the first information from the network device, the first device sends the K sensing signals on the first time-frequency resource based on the first information.

Specifically, the K sensing signals are separately sent, based on the time-frequency resource that carries the K sensing signals in one slot and that is indicated by the first information, on the time-frequency resource that carries the K sensing signals.

S1306: The second device receives an echo signal of the sensing signal on the first time-frequency resource based on the first information.

Specifically, the first device receives the echo signal of the sensing signal on the first time-frequency resource based on the time-frequency resource that carries the K sensing signals and that is indicated by the first information.

It should be understood that the echo signal of the sensing signal received by the second device on the first time-frequency resource may be K echo signals corresponding to the K sensing signals, or may be echo signals corresponding to some of the K sensing signals. A quantity of echo signals of the sensing signal received by the second device on the first time-frequency resource based on the first information is not limited in this application.

It should be noted that, in the method 1300 shown in FIG. 13, actions performed by the first device and the second device are not limited, in other words, actions performed by the first device and the second node device may be exchanged. For example, in S1305, the second device may send the K sensing signals on the first time-frequency resource based on the first information, and in S1306, the first device may receive the echo signal of the sensing signal on the first time-frequency resource based on the first information. This is not limited in this application.

Based on the foregoing solution, the **IAB** node (the first device and the second device) sends the sensing signal and receives the echo signal in the slot in a frequency hopping manner, so that a quantity of sensing signals sent by the **IAB** node in the slot increases. Therefore, the **IAB** node accumulates more echo signal energy during sensing, to improve a sensing coverage capability of the **IAB** node. **In** addition, a union set of frequency domain resources occupied by all sensing signals is an entire bandwidth. This is equivalent to a case in which the **IAB** node uses the entire bandwidth to perform sensing. **In** this way, a sensing coverage capability of the **IAB** node can be improved without reducing a range resolution capability/range precision.

It may be understood that the examples in FIG. 5 to FIG. 13 in embodiments of this application are merely intended to help a person skilled in the art understand embodiments of this application, but are not intended to limit embodiments of this application to specific scenarios in the examples. A person skilled in the art may clearly make various equivalent modifications or changes based on the examples shown in FIG. 5 to FIG. 13, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names in embodiments of this application, for example, the first information or the second information, do not limit the protection scope of embodiments of this application.

It may be further understood that in the foregoing method embodiments, the method and the operation implemented by the first device may be implemented by a component (for example, a chip or a circuit) of the first device. In addition, the method and the operation implemented by the network device may be implemented by a component (for example, a chip or a circuit) of the network device. The method and the operation implemented by the second device may be implemented by a component (for example, a chip or a circuit) of the second device. This is not limited. In correspondence to the methods provided in the foregoing method embodiments, an embodiment of this application further provides a corresponding apparatus. The apparatus includes corresponding modules configured to perform the foregoing method embodiments. The modules may be software, hardware, or a combination of software and hardware. It may be understood that the technical features described in the method embodiments are also applicable to the following apparatus embodiments.

It should be understood that a first device, a second device, and a network device may perform some or all steps in the foregoing embodiments. These steps or operations are merely examples. In embodiments of this application, other operations or variations of various operations may be further performed. In addition, the steps may be performed in another order different from that presented in the foregoing embodiments, and not all the operations in the foregoing embodiments may be performed.

The foregoing describes in detail the communication methods provided in embodiments of this application with reference to FIG. 5 to FIG. 13. The following describes in detail communication apparatuses provided in embodiments of this application with reference to FIG. 14 to FIG. 16. It should be understood that descriptions of the apparatus embodiments correspond to descriptions of the method embodiments. Therefore, for content that is not described in detail, refer to the foregoing method embodiments. For brevity, some content is not described herein again.

FIG. 14 is a block diagram of a communication apparatus according to an embodiment of this application. The apparatus 1400 includes a transceiver unit 1410. The transceiver unit 1410 may be configured to implement a corresponding communication function. The transceiver unit 1410 may also be referred to as a communication interface or a communication unit.

Optionally, the apparatus 1400 may further include a processing unit 1420. The processing unit 1420 may be configured to process data.

Optionally, the apparatus 1400 further includes a storage unit. The storage unit may be configured to store instructions and/or data. The processing unit 1420 may read the instructions and/or the data in the storage unit, so that the apparatus implements actions of different terminal devices in the foregoing method embodiments, for example, actions of the first device, the second device, and the network device.

The apparatus 1400 may be configured to perform actions performed by the first device, the second device, and the network device in the foregoing method embodiments. In this case, the apparatus 1400 may be the first device, the second device, the network device, or a component of the first device, the second device, or the network device. The transceiver unit 1410 is configured to perform receiving and sending related operations of the first device, the second device, and the network device in the foregoing method embodiments. The processing unit 1420 is configured to perform processing related operations of the first device, the second device, and the network device in the foregoing method embodiments.

It should be further understood that the apparatus 1400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1400 may be specifically the first device, the second device, or the network device in the foregoing embodiments, and may be configured to perform procedures and/or steps corresponding to the first device, the second device, and the network device in the foregoing method embodiments; or the apparatus 1400 may be specifically the first device, the second device, and the network device in the foregoing embodiments, and may be configured to perform procedures and/or steps corresponding to the first device, the second device, and the network device in the foregoing method embodiments. To avoid repetition, details are not described herein again.

The apparatus 1400 in each of the foregoing solutions has functions of implementing corresponding steps performed by the first device, the second device, and the network device in the foregoing method, or the apparatus 1400 in each of the foregoing solutions has functions of implementing corresponding steps performed by the first device, the second device, and the network device in the foregoing method. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1410 may alternatively be a transceiver circuit (for example, may include a receiver circuit and a transmitter circuit), and the processing unit may be a processing circuit.

It should be noted that the apparatus in FIG. 14 may be the network element or the device in the foregoing embodiments, or may be a chip or a chip system, for example, a system-on-chip (system on chip, SoC). The transceiver unit may be an input/output circuit or a communication interface. The processing unit is a processor, a microprocessor, or an integrated circuit integrated on the chip. This is not limited herein.

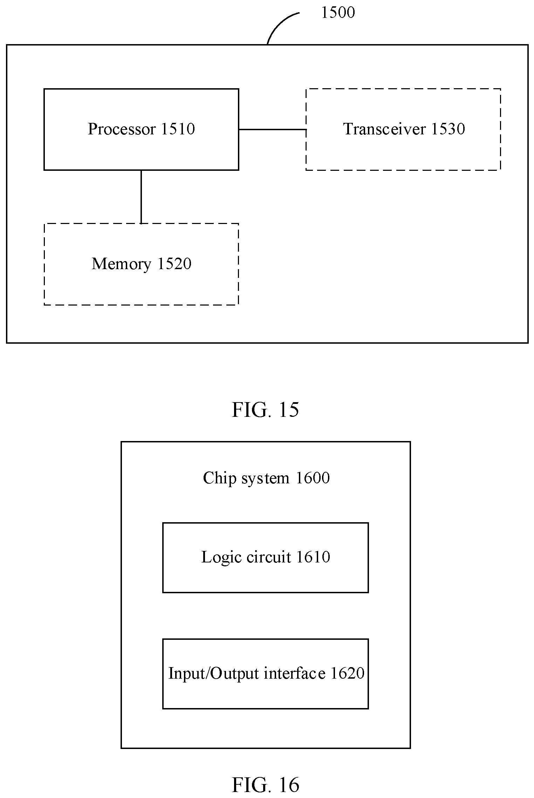

As shown in FIG. 15, an embodiment of this application provides another communication apparatus 1500. The apparatus 1500 includes a processor 1510. The processor 1510 is coupled to a memory 1520. The memory 1520 is configured to store a computer program or instructions and/or data. The processor 1510 is configured to execute the computer program or the instructions stored in the memory 1520, or read the data stored in the memory 1520, to perform the methods in the foregoing method embodiments.

Optionally, there are one or more processors 1510.

Optionally, there are one or more memories 1520.

Optionally, the memory 1520 and the processor 1510 are integrated or disposed separately.

Optionally, as shown in FIG. 15, the apparatus 1500 further includes a transceiver 1530. The transceiver 1530 is configured to receive and/or send a signal. For example, the processor 1510 is configured to control the transceiver 1530 to receive and/or send the signal.

In a solution, the apparatus 1500 is configured to implement operations performed by the first device, the second device, and the network device in the foregoing method embodiments.

For example, the processor 1510 is configured to execute the computer program or the instructions stored in the memory 1520, to implement related operations of the first device in the foregoing method embodiments, for example, the method implemented by the first device in any one of the embodiments shown in FIG. 5 to FIG. 13, or the method implemented by the first device in any one of the embodiments shown in FIG. 5 to FIG. 13.

It should be understood that, the processor mentioned in this embodiment of this application may be a central processing unit (central processing unit, CPU), and may alternatively be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. A general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

As shown in FIG. 16, an embodiment of this application provides a chip system 1600. The chip system 1600 (or may also be referred to as a processing system) includes a logic circuit 1610 and an input/output interface (input/output interface) 1620.

The logic circuit 1610 may be a processing circuit in the chip system 1600. The logic circuit 1610 may be coupled to and connected to a storage unit, and invoke instructions in the storage unit, to enable the chip system 1600 to implement the methods and functions in embodiments of this application. The input/output interface 1620 may be an input/output circuit in the chip system 1600, and outputs information processed by the chip system 1600, or inputs to-be-processed data or signaling information into the chip system 1600 for processing.

In a solution, the chip system 1600 is configured to implement operations performed by the first device, the second device, and the network device in the foregoing method embodiments.

For example, the logic circuit 1610 is configured to implement a processing-related operation of the first device in the foregoing method embodiments, for example, a processing-related operation of the first device in any one of the embodiments shown in FIG. 5 to FIG. 13. The input/output interface 1620 is configured to implement a sending and/or receiving-related operation of the first device in the foregoing method embodiments, for example, a sending and/or receiving-related operation of the first device in any one of the embodiments shown in FIG. 5 to FIG. 13.

An embodiment of this application further provides a computer-readable storage medium. The computer-readable storage medium stores computer instructions used to implement the method performed by the first device, the second device, and the network device in the foregoing method embodiments.

For example, when a computer program is executed by a computer, the computer is enabled to implement the methods performed by the first device, the second device, and the network device in the foregoing method embodiments.

An embodiment of this application further provides a computer program product, including instructions. When the instructions are executed by a computer, the method performed by the first device, the second device, and the network device in the foregoing method embodiments is implemented.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk drive, a read-only memory (read-only memory, ROM), a random-access memory (random-access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first device, first information from a network device, wherein the first information indicates a first time-frequency resource, the first time-frequency resource is a time-frequency resource that carries K sensing signals in one slot, the first time-frequency resource comprises K time domain symbols in time domain, the first time-frequency resource comprises M frequency domain resources that do not overlap each other in frequency domain, at least two sensing signals comprised in the K sensing signals occupy different frequency domain resources in the first time-frequency resource, K and M are positive integers, K is greater than or equal to M, and K is greater than or equal to 2; and
sending, by the first device, the K sensing signals on the first time-frequency resource based on the first information.

2. The method according to claim 1, wherein the first device is an integrated access and backhaul IAB device.

3. The method according to claim 1 or 2, wherein the M frequency domain resources are consecutive in frequency domain.

4. The method according to any one of claims 1 to 3, wherein the slot comprises S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

5. The method according to claim 4, wherein the slot comprises 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are:
{3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

6. The method according to any one of claims 1 to 5, wherein the first time-frequency resource does not overlap a control channel resource configured by the network device.

7. The method according to claim 5 or 6, wherein the first information comprises at least one of the following:
a frequency hopping period, a frequency hopping location, a frequency hopping bandwidth, or the indexes of the time domain symbols that carry the K sensing signals, wherein
the frequency hopping period is the C time domain symbols;
the frequency hopping location is locations of the M frequency domain resources; and
the frequency hopping bandwidth indicates bandwidths of the M frequency domain resources.

8. The method according to any one of claims 1 to 7, wherein the method further comprises:
receiving, by the first device, an echo signal of the sensing signal on the first time-frequency resource based on the first information.

9. A communication method, comprising:
determining, by a network device, first information, wherein the first information indicates a first time-frequency resource, the first time-frequency resource is a time-frequency resource that carries K sensing signals in one slot, the first time-frequency resource comprises K time domain symbols in time domain, the first time-frequency resource comprises M frequency domain resources that do not overlap each other in frequency domain, at least two sensing signals comprised in the K sensing signals occupy different frequency domain resources in the first time-frequency resource, K and M are positive integers, K is greater than or equal to M, and K is greater than or equal to 2; and
sending, by the network device, the first information to a first device.

10. The method according to claim 9, wherein the first device is an integrated access and backhaul IAB device.

11. The method according to claim 9 or 10, wherein the M frequency domain resources are consecutive in frequency domain.

12. The method according to any one of claims 9 to 11, wherein the slot comprises S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

13. The method according to claim 12, wherein the slot comprises 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are:
{3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

14. The method according to any one of claims 9 to 13, wherein the first time-frequency resource does not overlap a control channel resource configured by the network device.

15. The method according to claim 13 or 14, wherein the first information comprises at least one of the following:
a frequency hopping period, a frequency hopping location, a frequency hopping bandwidth, or the indexes of the time domain symbols that carry the K sensing signals, wherein
the frequency hopping period is the C time domain symbols;
the frequency hopping location is locations of the M frequency domain resources; and
the frequency hopping bandwidth indicates bandwidths of the M frequency domain resources.

16. The method according to any one of claims 9 to 15, wherein the method further comprises:
sending, by the network device, second information to a terminal device, wherein the second information indicates a time-frequency resource that does not carry a PDSCH, and the time-frequency resource that does not carry the PDSCH comprises a time-frequency resource occupied by at least one of the K sensing signals.

17. The method according to any one of claims 9 to 16, wherein the method further comprises:
sending, by the network device, the first information to a second device, wherein the second device is an IAB device.

18. A communication method, comprising:
receiving, by a second device, first information from a network device, wherein the first information indicates a first time-frequency resource, the first time-frequency resource is a time-frequency resource that carries K sensing signals in one slot, the first time-frequency resource comprises K time domain symbols in time domain, the first time-frequency resource comprises M frequency domain resources that do not overlap each other in frequency domain, at least two sensing signals comprised in the K sensing signals occupy different frequency domain resources in the first time-frequency resource, K and M are positive integers, K is greater than or equal to M, and K is greater than or equal to 2; and
receiving, by the second device, an echo signal of the sensing signal from a first device on the first time-frequency resource based on the first information.

19. The method according to claim 18, wherein the second device is an IAB device, and the first device is an IAB device.

20. The method according to claim 18 or 19, wherein the M frequency domain resources are consecutive in frequency domain.

21. The method according to any one of claims 18 to 20, wherein the slot comprises S time domain symbols, K=L×M, L is a positive integer, a k^{th} sensing signal and a (k+M)^{th} sensing signal in the K sensing signals occupy a same frequency domain resource and are separated by C time domain symbols, S is a positive integer greater than K, and C is a positive integer not greater than S/L.

22. The method according to claim 21, wherein the slot comprises 14 time domain symbols, indexes of the 14 time domain symbols are respectively {0, 1, 2, 3, 4, 5, 6, 7, 8, 9, 10, 11, 12, 13}, and indexes of the time domain symbols that carry the K sensing signals are:
{3, 4, 5, 6, 10, 11, 12, 13}, {3, 4, 5, 10, 11, 12}, {3, 6, 10, 13}, {4, 5, 6, 11, 12, 13}, or {5, 6, 12, 13}.

23. The method according to any one of claims 18 to 22, wherein the first time-frequency resource does not overlap a control channel resource configured by the network device.

24. The method according to claim 22 or 23, wherein the first information comprises at least one of the following:
a frequency hopping period, a frequency hopping location, a frequency hopping bandwidth, or the indexes of the time domain symbols that carry the K sensing signals, wherein
the frequency hopping period is the C time domain symbols;
the frequency hopping location is locations of the M frequency domain resources; and
the frequency hopping bandwidth indicates bandwidths of the M frequency domain resources.

25. A communication apparatus, comprising:
a processor, configured to execute a computer program stored in a memory, to enable the communication apparatus to perform the method according to any one of claims 1 to 8, enable the communication apparatus to perform the method according to any one of claims 9 to 17, or enable the communication apparatus to perform the method according to any one of claims 18 to 24.

26. A computer-readable storage medium, storing a computer program or instructions, wherein when the computer program or the instructions are executed by a processor, the method according to any one of claims 1 to 8 is performed, the method according to any one of claims 9 to 17 is performed, or the method according to any one of claims 18 to 24 is performed.

27. A computer program product comprising instructions, wherein when the computer program product runs on a computer, the method according to any one of claims 1 to 8 is performed, the method according to any one of claims 9 to 17 is performed, or the method according to any one of claims 18 to 24 is performed.

28. A chip system, comprising a processor, wherein the processor is configured to invoke a computer program or instructions from a memory and run the computer program or the instructions, to enable a communication apparatus in which the chip system is installed to implement the method according to any one of claims 1 to 8, enable a communication apparatus in which the chip system is installed to implement the method according to any one of claims 9 to 17, or enable a communication apparatus in which the chip system is installed to implement the method according to any one of claims 18 to 24.
